# EUROPÄISCHE PATENTSCHRIFT

(11) **EP 2 817 596 B1**
(45) Veröffentlichungstag und Bekanntmachung des Hinweises auf die Patenterteilung: **14.04.2021**
(21) Anmeldenummer: 13706955.5
(22) Anmeldetag: 22.02.2013
(51) Int. Cl.: G01H 1/12, H02J 50/10, H02K 11/20

(54) **SENSORANORDNUNG, VORRICHTUNG UND VERFAHREN ZUR ERMITTLUNG VON SCHWINGUNGEN EINES MESSOBJEKTS SOWIE MESSOBJEKT MIT ZUMINDEST EINER DERARTIGEN SENSORANORDNUNG**
SENSOR ASSEMBLY, DEVICE AND METHOD FOR DETERMINING VIBRATIONS OF A MEASUREMENT OBJECT, AND MEASUREMENT OBJECT HAVING AT LEAST ONE SUCH SENSOR ASSEMBLY
ENSEMBLE DE DÉTECTION, DISPOSITIF ET PROCÉDÉ PERMETTANT DE DÉTECTER LES VIBRATIONS D'UN OBJET À MESURER ET OBJET À MESURER COMPRENANT AU MOINS UN ENSEMBLE DE DÉTECTION DE CE TYPE

(30) Priorität: 23.02.2012 DE 102012202789
(43) Veröffentlichungstag der Anmeldung: 31.12.2014
(73) Patentinhaber: Micro-Sensys GmbH, 99098 Erfurt (DE)
(72) Erfinder: JURISCH, Reinhard, 99438 Meckfeld bei Bad Berka (DE); PEITSCH, Peter, 99099 Erfurt (DE)
(74) Vertreter: Liedtke, Markus
(86) Internationale Anmeldenummer: PCT/EP2013/053553
(87) Internationale Veröffentlichungsnummer: WO 2013/124412

(56) Entgegenhaltungen:
- US-A1- 2002 154 029
- US-A1- 2007 247 285

## Beschreibung

Die Erfindung betrifft eine Sensoranordnung zur Ermittlung von Schwingungen eines Messobjektes eine Vorrichtung zur Ermittlung von Schwingungen eines Messobjektes, ein Messobjekt mit zumindest einer Sensoranordnung und ein Verfahren zur Ermittlung von Schwingungen eines Messobjektes.

Aus dem Stand der Technik sind eine Vielzahl verschiedener Schwingungsmessvorrichtungen zur Schwingungsermittlung von Messobjekten, beispielsweise von Maschinen oder Gebäuden, bekannt. So ist es beispielweise bekannt, an einem Messobjekt, zum Beispiel an einer Maschine, eine Prüfschraube anzuordnen, welche einen Flansch oder ein Schraubgewinde für einen Messkopf einer Schwingungsmessvorrichtung aufweist. Zur Schwingungsmessung ist der Messkopf an der Prüfschraube zu befestigen. Der Messkopf weist einen Schwingungssensor auf und ist über eine Kabelverbindung mit einer Auswerteeinheit verbunden.

In der US 2007/0247285 A1 wird ein bei Kontrollgängen aktiviertes Messgerät zur Zustandsüberwachung von Maschinen mit rotierenden Elementen beschrieben. Das Messgerät ermöglicht es einem tragbaren RFID-Receiver, das Messgerät zu identifizieren, Messungen einzuleiten und Messdaten in Bezug auf den Zustand eines sich drehenden Elementes der Maschine zu empfangen. Das Messgerät ist dazu vorgesehen, auf der Außenseite der Maschine mittels Schrauben angebracht zu werden und Messdaten in Bezug auf den Zustand des sich drehenden Elementes zu erfassen und zu übermitteln. Das Messgerät wird bestromt und kommuniziert durch ein vom tragbaren RFID-Receiver erzeugtes magnetisches Feld und weist eine Beschleunigungssensoreinheit zur Schwingungsmessung auf.

Aus der US 2002/0154029 A1 ist eine Sensoreinheit bekannt, welche einen Sensor zum Erfassen eines für den Zustand einer Metall aufweisenden Struktur aussagekräftigen Parameters umfasst. Die Sensoreinheit umfasst des Weiteren einen elektrisch mit dem Sensor kommunizierenden Transponder, welcher nach dem Empfang eines drahtlosen Abfragesignals ein drahtloses Signal bezüglich des Parameterstatus durch einen Bereich der Struktur hindurch übermittelt. Zudem umfasst die Sensoreinheit eine elektrisch mit dem Transponder kommunizierende Identifikationseinheit zur eindeutigen Identifizierung der Sensoreinheit.

Der Erfindung liegt die Aufgabe zu Grunde, eine verbesserte Sensoranordnung zur Ermittlung von Schwingungen eines Messobjektes, eine verbesserte Vorrichtung zur Ermittlung von Schwingungen eines Messobjektes, ein Messobjekt mit zumindest einer verbesserten Sensoranordnung und ein verbessertes Verfahren zur Ermittlung von Schwingungen eines Messobjektes anzugeben.

Die Aufgabe wird erfindungsgemäß gelöst durch eine Sensoranordnung zur Ermittlung von Schwingungen eines Messobjektes mit den Merkmalen des Anspruchs 1, eine Vorrichtung zur Ermittlung von Schwingungen eines Messobjektes mit den Merkmalen des Anspruchs 4, ein Messobjekt mit zumindest einer Sensoranordnung mit den Merkmalen des Anspruchs 6 und ein Verfahren zur Ermittlung von Schwingungen eines Messobjektes mit den Merkmalen des Anspruchs 7.

Vorteilhafte Ausgestaltungen der Erfindung sind Gegenstand der Unteransprüche.

Eine erfindungsgemäße Sensoranordnung zur Ermittlung von Schwingungen eines Messobjektes ist stoffschlüssig, formschlüssig und/oder kraftschlüssig am Messobjekt befestigbar oder befestigt und umfasst einen RFID-Transponder und eine mit diesem gekoppelte Beschleunigungssensoreinheit, wobei Sensordaten der Beschleunigungssensoreinheit in einem Speicher zwischenzuspeichern und über den RFID-Transponder zu versenden sind. Die Sensoranordnung bildet einen Sensortransponder.

Der Begriff RFID-Transponder wird hier für eine auch als RFID-Interface bezeichnete Einheit der Sensoranordnung verwendet, d. h. die Sensoranordnung umfasst den RFID-Transponder, auch als RFID-Interface bezeichnet, und zusätzlich die Beschleunigungssensoreinheit.

Ein erfindungsgemäßes Messobjekt weist zumindest eine derartige Sensoranordnung auf, welche am Messobjekt stoffschlüssig, formschlüssig und/oder kraftschlüssig befestigt ist.

Eine erfindungsgemäße Vorrichtung zur Ermittlung von Schwingungen eines derartigen Messobjektes umfasst zumindest eine derartige Sensoranordnung, welche am Messobjekt stoffschlüssig, formschlüssig und/oder kraftschlüssig befestigt ist, und zumindest eine Auswerteeinheit zum Steuern und/oder Regeln der Sensoranordnung und/oder zum Auslesen von Sensordaten der Sensoranordnung, wobei die Auswerteeinheit mit einem RFID-Lesegerät gekoppelt ist oder wobei das RFID-Lesegerät in die Auswerteeinheit integriert ist.

Die Befestigung der Sensoranordnung am Messobjekt bedeutet dabei, dass die Sensoranordnung an einer beliebigen, jeweils geeigneten Position am Messobjekt befestigt sein kann, beispielsweise an einer Außenseite des Messobjektes oder im Messobjekt.

Der Begriff RFID steht dabei für "radio-frequency identification" und bezeichnet ein auf elektromagnetischen Wellen basierendes drahtloses Datenübertragungsverfahren, d. h. ein funkbasiertes Datenübertragungsverfahren, für welches ein RFID-Transponder und ein RFID-Lesegerät, auch als RFID-Reader bezeichnet, erforderlich ist. Der RFID-Transponder wird dabei durch an ihn vom RFID-Lesegerät übermittelte Funksignale angesprochen. Er antwortet üblicherweise durch Übertragung eines eindeutigen Identifikationscodes und gegebenenfalls weiterer Informationen. Über den eindeutigen Identifikationscode ist die Messstelle bzw. das Messobjekt, an welchem die Sensoranordnung befestigt ist, eindeutig identifizierbar und ermittelte Sensordaten sind dem jeweiligen Messobjekt eindeutig zuzuordnen. Die Übertragung des eindeutigen Identifikationscodes ist jedoch nicht zwingend erforderlich. Es ist auch möglich, dass der RFID-Transponder ausschließlich die anderen Informationen an das RFID-Lesegerät überträgt.

Diese Sensoranordnung, das Messobjekt mit der daran stoffschlüssig, formschlüssig und/oder kraftschlüssig befestigten Sensoranordnung und die Vorrichtung ermöglichen auf einfache und kostengünstige Weise eine hochgenaue Schwingungsermittlung, welche nicht durch äußere Einflüsse verfälscht ist, da die Sensordaten der Beschleunigungssensoreinheit mittels des RFID-Lesegerätes berührungslos, insbesondere drahtlos, auslesbar sind. Dadurch ist keine Berührung des Messobjektes erforderlich, welche Schwingungen des Messobjektes beeinflussen und verändern würde, wie dies im Stand der Technik der Fall ist. Bei derartigen Schwingungsmessungen nach dem Stand der Technik wird ein Prüfkopf mit einem Beschleunigungssensor an einer Prüfschraube des Messobjektes befestigt. Der Prüfkopf ist durch ein Kabel mit einer Auswerteeinheit verbunden. Durch diese Anordnung werden die Schwingungen des Messobjektes verfälscht.

Erfindungsgemäß ist der Beschleunigungssensor der Sensoranordnung über den RFID-Transponder mit elektrischer Energie zu versorgen, so dass der Beschleunigungssensor keine eigene Energiequelle beispielsweise in Form einer Batterie benötigt. Der RFID-Transponder ist erfindungsgemäß als ein passiver RFID-Transponder ausgebildet. Ein derartiger passiver RFID-Transponder weist keine eigene Energieversorgung auf, d. h. keine Batterie, sondern es ist mittels vom RFID-Lesegerät ausgesendeter elektromagnetischer Wellen elektrische Energie durch Induktion auf den RFID-Transponder zu übertragen. Diese elektrische Energie wird erfindungsgemäß in einem Kondensator des RFID-Transponders kurzzeitig kapazitiv zwischengespeichert. Mit dieser elektrischen Energie ist auch die Beschleunigungssensoreinheit zu betreiben.

Auf diese Weise ist die Sensoranordnung besonders klein und leicht auszubilden, da sie keine einen größeren Bauraum erfordernde Batterie aufweist. Dadurch ist die Sensoranordnung auf sehr einfache Weise an einer geeigneten Stelle beispielsweise an einem Gehäuse des Messobjektes anzuordnen, ohne eine Funktion des Messobjektes zu beeinträchtigen oder die Schwingungen des Messobjektes zu beeinflussen. Zu diesem Zweck sind der RFID-Transponder und die Beschleunigungssensoreinheit vorzugsweise als eine gemeinsame Baueinheit ausgebildet und zweckmäßigerweise in einem gemeinsamen Gehäuse angeordnet, mittels welchem sie am Messobjekt zu befestigen sind. Des Weiteren ist, da keine Batterie eingesetzt ist, auch kein Batteriewechsel erforderlich. Dadurch sind eine Kontrolle und Wartung der Sensoranordnung und damit verbundene Kosten erheblich reduziert oder entfallen vollständig. Die Sensoranordnung ist immer funktionsbereit, da deren Energieversorgung durch das RFID-Lesegerät sichergestellt ist. Ein Funktionsausfall, welcher aus einer entladenen Batterie resultieren würde, ist auf diese Weise vermieden.

Alternativ zu einem gemeinsamen Gehäuse der Sensoranordnung ist es auch möglich, verschiedene Bestandteile der Sensoranordnung getrennt voneinander anzuordnen und beispielsweise kabelgebunden miteinander zu verbinden. So kann beispielsweise, wenn eine Schwingungsermittlung im Inneren des Messobjektes erforderlich ist, die Beschleunigungssensoreinheit im Inneren und der RFID-Transponder außen am Messobjekt angeordnet sein, verbunden durch ein oder mehrere Kabel. Auf diese Weise sind die berührungslose Datenübertragung zwischen dem RFID-Transponder und dem RFID-Lesegerät und die berührungslose Energieübertragung zwischen dem RFID-Lesegerät und dem RFID-Transponder weiterhin ermöglicht. Bei einer Anordnung der gesamten Sensoranordnung im Messobjekt könnte diese berührungslose Datenübertragung und Energieübertragung beispielsweise aufgrund eines zu großen Abstandes zwischen dem RFID-Transponder und dem RFID-Lesegerät und/oder aufgrund einer metallischen Abschirmung beispielsweise durch das Gehäuse des Messobjektes gestört oder vollständig unterbunden sein.

Eine derartige Sensoranordnung weist beispielsweise lediglich einen Durchmesser von ca. 15 mm, eine Dicke von ca. einem Millimeter und ein Gewicht von ca. 0,2 g auf. Das Gewicht ist damit gegenüber einem Gewicht des Messobjektes verschwindend gering, so dass das Messobjekt durch die Sensoranordnung nicht beeinflusst ist. Durch die sehr geringen Abmessungen ist die Sensoranordnung sehr einfach am Messobjekt anzuordnen. Durch das kontaktlose Auslesen des RFID-Transponders ist es dabei auch möglich, die Sensoranordnung an relativ unzugänglichen Stellen am Messobjekt anzuordnen, da es lediglich erforderlich ist, dass RFID-Lesegerät in eine ausreichende Nähe zum RFID-Transponder zu bringen, so dass die Kontaktaufnahme und die Datenübertragungsverbindung zwischen dem RFID-Lesegerät und dem RFID-Transponder ermöglicht ist.

Die Sensoranordnung ist miniaturisiert ausgebildet und drahtlos auszulesen. Auf diese Weise ist keine mechanische Kopplung zwischen der Sensoranordnung und der Auswerteeinheit erforderlich. Dadurch ist eine Beeinflussung der zu ermittelnden Schwingungen des Messobjektes durch die Auswerteeinheit, wie dies im Stand der Technik der Fall ist, vermieden. Des Weiteren ist durch die miniaturisierte Ausbildung der Sensoranordnung, insbesondere durch deren sehr geringes Gewicht, eine Beeinflussung der zu ermittelnden Schwingungen des Messobjektes durch die an diesem angeordnete Sensoranordnung vermieden oder zumindest deutlich reduziert. Auf diese Weise ermöglichen die Sensoranordnung und die Vorrichtung eine hochgenaue und unbeeinflusste Ermittlung der Schwingungen des Messobjektes.

Erfindungsgemäß ist für eine Schaltungskomponente, welche ein RFID-Frontend des RFID-Transponders, den Speicher und eine Steuerlogik aufweist, eine kleine Glättungskapazität vorgesehen, und eine Sensorikschaltung aus Beschleunigungssensor, Sensorlogik und Analog-Digital-Wandler wird mit dem als große Glättungs- und/oder Speicherkapazität ausgebildeten Kondensator betrieben, der über eine Trennschaltung an eine Basisbetriebsspannung angekoppelt ist.

Vorzugsweise ist die Beschleunigungssensoreinheit derart ausgebildet, dass mit ihr Beschleunigungen in einer Dimension oder in mehreren Dimensionen eines räumlichen Koordinatensystems erfassbar sind, d. h. beispielsweise Beschleunigungen parallel zu einer x-Achse, parallel zu einer y-Achse und/oder parallel zu einer z-Achse des räumlichen Koordinatensystems und/oder Rotationsbeschleunigungen. Die Dimensionen, in welchen die Beschleunigungen zu ermitteln sind, sind zweckmäßigerweise jeweils von einem Bediener der Vorrichtung über die Auswerteeinheit auszuwählen und über den RFID-Transponder an die Beschleunigungssensoreinheit zu übermitteln.

Zweckmäßigerweise umfasst die Sensoranordnung eine Abschirmung gegenüber dem Messobjekt aus einem magnetisch permeablen Material, beispielsweise aus einem Ferritmaterial oder aus einem anderen magnetisch permeablen Material. Diese Abschirmung ist beispielsweise an einer dem Messobjekt zugewandten Rückseite der Sensoranordnung angeordnet. Durch die Abschirmung ist eine Störung des durch das RFID-Lesegerät erzeugten elektromagnetischen Wellen durch beispielsweise ein Metallgehäuse des Messobjektes verhindert oder zumindest deutlich reduziert, da die elektromagnetischen Wellen durch die Abschirmung in vorgegebener Weise umgelenkt und vom Messobjekt, d. h. von dessen Metallgehäuse abgelenkt werden. Die Abschirmung ist nur erforderlich, wenn eine derartige Störung durch das Messobjekt zu befürchten ist, d. h. wahrscheinlich oder sicher ist, insbesondere wenn das Messobjekt und/oder dessen Gehäuse aus einem elektrisch leitfähigen Material ist, d. h. insbesondere aus Metall. Ist dies nicht der Fall, weil das Messobjekt aus einem anderen Material ist, beispielsweise aus Glas, so ist die Abschirmung nicht erforderlich.

Die Auswerteeinheit der Vorrichtung weist zweckmäßigerweise zumindest eine Eingabeeinheit, zumindest eine Ausgabeeinheit und/oder zumindest eine Verarbeitungseinheit zur Verarbeitung und Auswertung von empfangenen Sensordaten der Sensoranordnung auf. Auf diese Weise sind Vorgaben für eine jeweils durchzuführende Schwingungsermittlung an der Auswerteeinheit der Vorrichtung auszuwählen und an die Sensoranordnung zu übermitteln. Des Weiteren sind die von der Sensoranordnung empfangenen Sensordaten auszuwählen und über die Ausgabeeinheit darzustellen. Zudem kann die Auswerteeinheit beispielsweise zumindest eine drahtlose oder drahtgebundene Schnittstelle aufweisen, um Daten der jeweiligen Schwingungsermittlung weiterzuleiten.

In einem erfindungsgemäßen Verfahren zur Ermittlung von Schwingungen des Messobjektes unter Verwendung der Vorrichtung werden Sensordaten der an einem Messobjekt stoffschlüssig, formschlüssig und/oder kraftschlüssig befestigten Sensoranordnung mittels des Lesegerätes berührungslos, insbesondere drahtlos, ausgelesen. Aus dem Verfahren, welches mit der Vorrichtung durchgeführt wird, resultieren daher die bereits geschilderten Vorteile der Vorrichtung bzw. von deren Sensoranordnung. Es wird auf einfache und kostengünstige Weise eine hochgenaue und nicht durch Berührungen des Messobjektes verfälschte Schwingungsermittlung ermöglicht.

Erfindungsgemäß wird mittels des RFID-Lesegerätes der Auswerteeinheit berührungslos Kontakt zu dem RFID-Transponder der Sensoranordnung aufgenommen, wobei der RFID-Transponder vom RFID-Lesegerät mit elektrischer Energie versorgt wird, welche im RFID-Transponder gespeichert wird. Danach wird der Kontakt des RFID-Lesegerätes zum RFID-Transponder unterbrochen und mittels der Sensoranordnung eine Schwingungsermittlung durchgeführt, wobei die Beschleunigungssensoreinheit der Sensoranordnung über den RFID-Transponder mit elektrischer Energie versorgt wird. Nach der Schwingungsermittlung wird der Kontakt zwischen dem RFID-Lesegerät und dem RFID-Transponder wieder hergestellt, um die von der Sensoranordnung ermittelten Sensordaten mittels des RFID-Transponders an das RFID-Lesegerät der Auswerteeinheit zu übertragen. Auf diese Weise wird sichergestellt, dass die Schwingungsermittlung nicht durch die Auswerteeinheit und deren RFID-Lesegerät beeinflusst wird, dass beispielsweise auch der Beschleunigungssensor nicht durch die elektromagnetischen Wellen des RFID-Lesegerätes gestört wird.

Des Weiteren kann auf diese Weise die Sensoranordnung oder deren RFID-Transponder mit dem RFID-Lesegerät während der Daten- und Energieübertragung berührt werden, d. h. das RFID-Lesegerät muss nicht in einem Abstand zum RFID-Transponder gehalten werden, sondern kann auch auf diesen aufgesetzt werden, so dass ein optimaler drahtloser Kontakt zwischen RFID-Lesegerät und RFID-Transponder sichergestellt ist. In diesem Fall berühren sich zwar das RFID-Lesegerät und die Sensoranordnung bzw. deren RFID-Transponder, der Kontakt zwischen diesen zur Datenübertragung und Energieübertragung findet jedoch weiterhin berührungslos, insbesondere drahtlos statt, d. h. es ist keine drahtgebundene Schnittstelle vorhanden, welche zur Daten- und Energieübertragung berührt bzw. kontaktiert werden muss. Das Berühren des RFID-Transponderns bzw. der Sensoranordnung mit dem RFID-Lesegerät ist für die Daten- und Energieübertragung nicht zwingend erforderlich, diese funktioniert auch, wenn das RFID-Lesegerät vorgegeben beabstandet ist, es wird aber die Bedienung erleichtert, da das RFID-Lesegerät den RFID-Transponder bzw. die Sensoranordnung berühren darf. Die Schwingungsermittlung wird dadurch nicht beeinflusst, da diese erst durchgeführt wird, nachdem der Kontakt zwischen dem RFID-Lesegerät und dem RFID-Transponder wieder unterbrochen ist, d. h. nachdem das RFID-Lesegerät entfernt ist, so dass es die Schwingungsermittlung nicht stören kann.

Zum Unterbrechen des Kontaktes zwischen dem RFID-Lesegerät und dem RFID-Transponder wird beispielsweise das RFID-Lesegerät abgeschaltet und/oder von der Sensoranordnung ausreichend weit entfernt, so dass die elektromagnetischen Wellen des RFID-Lesegerätes die Sensoranordnung nicht mehr erreichen. Ein Zeitpunkt der Kontaktunterbrechung kann beispielsweise in Abhängigkeit von einem Ladezustand des Kondensators der Sensoranordnung festgelegt werden und/oder in Abhängigkeit von einer Kontaktzeit bzw. von einer Ladezeit des Kondensators. Dadurch wird sichergestellt, dass die im Kondensator der Sensoranordnung gespeicherte elektrische Energie für die nachfolgenden Aktivitäten der Sensoranordnung ausreicht, d. h. zumindest für die Schwingungsermittlung bzw. Beschleunigungsermittlung und deren Speicherung solange, bis durch die erneute Kontaktaufnahme zum Auslesen der Sensordaten aus der Sensoranordnung wieder eine Energieübertragung vom RFID-Lesegerät auf die Sensoranordnung erfolgt. Der Beginn der Beschleunigungsermittlung bzw. der daraus resultierenden Schwingungsermittlung kann beispielsweise durch eine Detektion der Kontaktunterbrechung zwischen dem RFID-Transponder und dem RFID-Lesegerät ausgelöst werden oder durch eine entsprechende zeitliche Vorgabe, beispielsweise durch eine vorgegebene Startverzögerung für die Schwingungsermittlung.

Die Schwingungsermittlung wird vorteilhafterweise automatisch gestartet, nachdem der Kontakt des RFID-Lesegerätes zum RFID-Transponder unterbrochen wurde. Der Kontakt zwischen dem RFID-Lesegerätes und dem RFID-Transponder kann beispielsweise automatisch abgebrochen werden und/oder die Schwingungsermittlung automatisch gestartet werden, sobald der Kondensator oder ein anderer Energiespeicher des RFID-Transponders vollständig geladen ist.

In einer alternativen Ausführungsform des Verfahrens kann natürlich die Schwingungsermittlung auch durchgeführt werden, während das RFID-Lesegerät mit dem RFID-Transponder verbunden ist. Es wird dann beispielsweise keine Startverzögerung der Schwingungsermittlung vorgegeben, sondern ein sofortiger Start der Schwingungsermittlung. Auf diese Weise ist eine ständige Energieversorgung des RFID-Transponders und der Beschleunigungssensoreinheit über das RFID-Lesegerät sichergestellt, so dass beispielsweise auch Schwingungsermittlungen über einen längeren Zeitraum durchgeführt werden können. Dabei ist jedoch sicherzustellen, dass die Schwingungsermittlung durch das elektromagnetische Feld des RFID-Lesegerätes nicht beeinträchtigt wird oder dass derartige mögliche Beeinträchtigungen bei einer Auswertung der ermittelten Schwingungen als mögliche Fehlerquelle berücksichtigt werden.

Die Sensoranordnung, die Vorrichtung und das Verfahren sind beispielsweise für Messobjekte verwendbar, welche als ein Bauwerk, beispielsweise als ein Gebäude, eine Brücke oder eine Straße, als ein Bauuntergrund, als eine Fahrbahn oder insbesondere als eine Maschine oder Anlage ausgebildet sind, zum Beispiel als ein Motor, ein Generator, eine Turbine, ein Windrad oder ein Generator oder als deren Lager oder Welle. Dabei sind die Sensoranordnung, die Vorrichtung und das Verfahren beispielsweise zu Wartungs- und Instandhaltungszwecken oder zu Analysen von Produktionsabläufen, Anlagen oder Technologien einzusetzen. Anwendungsbereiche sind beispielsweise Schwingungsmessungen an derartigen Messobjekten in der chemischen Industrie, an Kraftwerken, in der Stahlindustrie oder in der Papierherstellung.

Derartige Schwingungsermittlungen sind oft entscheidend, um mögliche Schäden, zum Beispiel defekte Lager, möglichst frühzeitig bei Routinekontrollen zu erkennen, so dass sehr schnell darauf reagiert werden kann. Dadurch können lange Stillstandszeiten und damit verbundene hohe Kosten vermieden werden. Des Weiteren sind mittels der Sensoranordnung, der Vorrichtung und des Verfahrens neben der Schwingungsermittlung auch Lagebestimmungen durch die Ermittlung von Beschleunigungen möglich. Dies ermöglicht beispielsweise eine Neigungsbestimmung, zum Beispiel von Gefäßen, durch eine Ermittlung der Beschleunigung während eines Neigevorgangs.

Zudem ermöglichen die Sensoranordnung, die Vorrichtung und das Verfahren beispielsweise auch eine Überwachung empfindlicher Güter, welche durch zu starke Schwingungen geschädigt werden könnten, zum Beispiel Glasscheiben oder Halbleiterwafer. In diesem Fall ist das zu überwachende Gut das Messobjekt, an welchem zumindest eine Sensoranordnung an einer geeigneten Stelle stoffschlüssig, formschlüssig und/oder kraftschlüssig befestigt wird. Eine oder mehrere Auswerteeinheiten sind dann beispielsweise an zu untersuchenden Stellen in einem Produktionsablauf angeordnet, an welchen beispielsweise starke Beschleunigungen des jeweiligen Gutes durch eine Produktionsanlage, durch Anschläge oder durch schnelle Drehbewegungen auftreten.

Die Auswerteeinheiten oder zumindest deren RFID-Lesegeräte sind an diesen Stellen beispielsweise stationär angeordnet oder werden kurzzeitig parallel zum Messobjekt bewegt. Im Bereich des jeweiligen RFID-Lesegerätes wird die Sensoranordnung durch die elektromagnetischen Wellen des RFID-Lesegerätes, d. h. durch dessen Hochfrequenzfeld aktiviert und führt die gewünschten Beschleunigungsmessungen und die daraus resultierende Schwingungsermittlung durch. Die Sensordaten können dann beispielsweise sofort an das RFID-Lesegerät übertragen werden. Reicht aufgrund der Geschwindigkeit des zu überwachenden Messobjektes eine Zeit, in welcher sich die jeweilige Sensoranordnung in einem Funktionsbereich des RFID-Lesegerätes befindet, nicht aus, um die Sensordaten zu übertragen, so können die Sensordaten auch in einem nicht flüchtigen Speicher der Sensoranordnung gespeichert werden und zu einem späteren Zeitpunkt mit einem RFID-Lesegerät ausgelesen werden.

Es können auch eine Mehrzahl derartiger Sensoreinanordnungen am jeweiligen Messobjekt befestigt sein, um Schwingungsermittlungen an mehreren Messstellen durchzuführen. In diesem Fall kann beispielsweise ein RFID-Lesegerät mit einer entsprechend ausgebildeten Antenne auch eine Mehrzahl von Sensoranordnungen, welche sich im Funktionsbereich der Antenne befinden, aktivieren und auslesen. Dies erfolgt beispielsweise unter Verwendung eines der aus dem Stand der Technik bekannten Antikollisionsverfahren für RFID-Transponder.

Ausführungsbeispiele der Erfindung werden im Folgenden anhand von Zeichnungen näher erläutert.

Darin zeigen:
- Figur 1: schematisch ein Messobjekt und eine erste Ausführungsform einer Vorrichtung zur Ermittlung von Schwingungen des Messobjektes,
- Figur 2: schematisch ein Messobjekt und eine zweite Ausführungsform einer Vorrichtung zur Ermittlung von Schwingungen des Messobjektes,
- Figur 3: schematisch eine Sensoranordnung zur Ermittlung von Schwingungen eines Messobjektes,
- Figur 4: schematisch eine weitere Ausführungsform einer Sensoranordnung zur Ermittlung von Schwingungen eines Messobjektes,
- Figur 5: schematisch eine weitere Ausführungsform einer Sensoranordnung zur Ermittlung von Schwingungen eines Messobjektes, und
- Figur 6: schematisch eine weitere Ausführungsform einer Sensoranordnung zur Ermittlung von Schwingungen eines Messobjektes.

Einander entsprechende Teile sind in allen Figuren mit den gleichen Bezugszeichen versehen.

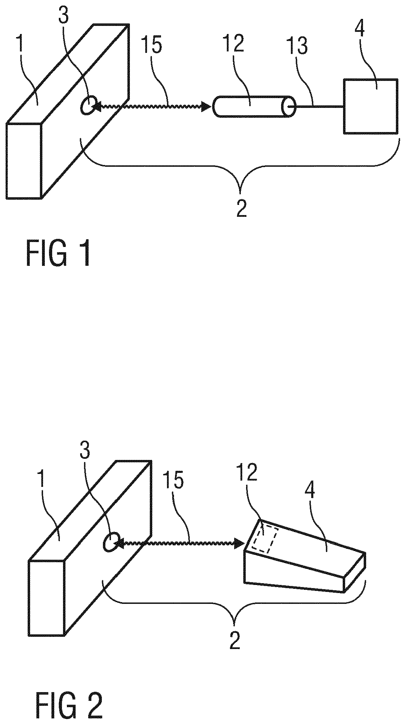

Die Figuren 1 und 2 zeigen schematisch ein Messobjekt 1 und eine Vorrichtung 2 zur Ermittlung von Schwingungen des Messobjektes 1. Das Messobjekt 1 ist beispielsweise als ein Bauwerk, zum Beispiel als ein Gebäude, eine Brücke oder eine Straße, als ein Bauuntergrund, als eine Fahrbahn oder insbesondere als eine Maschine oder Anlage ausgebildet, zum Beispiel als ein Motor, ein Generator, eine Turbine, ein Windrad oder ein Generator oder als deren Lager oder Welle. Des Weiteren kann das Messobjekt 1 beispielsweise als ein Gut ausgebildet sein, welches durch zu starke Schwingungen geschädigt werden könnte, zum Beispiel eine Glasscheibe oder ein Halbleiterwafer.

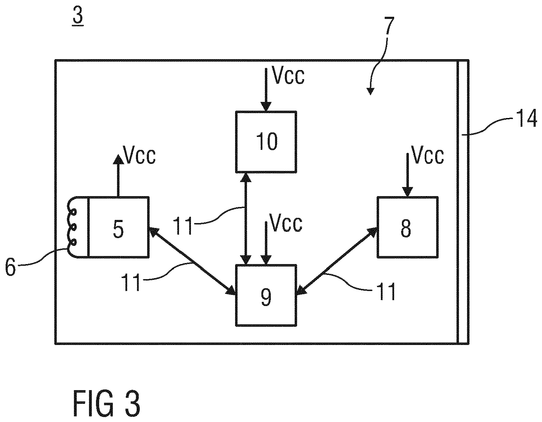

Die Vorrichtung 2 weist eine Sensoranordnung 3 und eine Auswerteeinheit 4 auf. Die Sensoranordnung 3, welche in Figur 3 detailliert dargestellt ist, ist am Messobjekt 1 stoffschlüssig, formschlüssig und/oder kraftschlüssig befestigt, beispielsweise angeklebt oder angeschraubt. Sie umfasst einen RFID-Transponder 5, welcher eine Antenne 6 zum Empfangen und Senden von elektromagnetischen Wellen aufweist, d. h. zum Empfangen und Senden von hochfrequenten Signalen (HF-Signalen) oder ultrahochfrequenten Signalen (UHF-Signalen). Die Antenne 6 ist in diesem Beispiel als eine Antennenspule ausgebildet. Sie kann in weiteren Ausführungsbeispielen auch als ein Dipol ausgebildet sein.

Des Weiteren umfasst die Sensoranordnung 3 eine mit dem RFID-Transponder 5 gekoppelte Beschleunigungssensoreinheit 7. Diese Beschleunigungssensoreinheit 7 weist einen Beschleunigungssensor 8, eine beispielsweise als Mikrocontroller ausgebildete Steuerungs- und Verarbeitungseinheit 9 und einen Speicher 10 auf. Dabei können der Speicher 10 und die Steuerungs- und Verarbeitungseinheit 9 beispielsweise auch als eine Baueinheit ausgebildet sein. Die Steuerungs- und Verarbeitungseinheit 9 weist einen Analog-Digital-Wandler auf oder ist mit einem solchen gekoppelt, um analoge Sensorsignale des Beschleunigungssensors 8 vor einer Weiterverarbeitung und/oder Weiterleitung zu digitalisieren.

Der Speicher 10 kann ein flüchtiger Speicher 10 sein, beispielsweise ein RAM-Speicher, in welchem nur bei fortgesetzter Energiezufuhr Daten gespeichert werden, oder ein nichtflüchtiger Speicher 10, zum Beispiel ein EEPROM oder ein FRAM, in welchem Daten auch ohne Energiezufuhr weiterhin gespeichert bleiben. Dies ist sinnvoll, wenn die Sensordaten länger zwischengespeichert werden sollen. Der Beschleunigungssensor 8 ist beispielsweise ein mikromechanischer Sensor, welcher Beschleunigungen auf kapazitiver Basis ermittelt, oder ein piezoelektrischer oder ein piezoresistiver Sensor. Auch weitere allgemein bekannte Sensoren sind als Beschleunigungssensor 8 möglich. Es können auch eine Mehrzahl von Beschleunigungssensoren 8 vorgesehen sein.

Die Steuerungs- und Verarbeitungseinheit 9 ist über Datenverbindungen 11, beispielsweise PC-Busverbindungen, mit dem Speicher 10, mit dem Beschleunigungssensor 8 und mit dem RFID-Transponder 5 verbunden. Dabei können für mehrere oder alle Datenverbindungen 11 ein gemeinsamer Datenbus genutzt werden oder die Datenverbindungen 11 sind als unabhängige Datenbusse ausgebildet.

Vom Beschleunigungssensor 8 ermittelte Sensordaten werden vom Beschleunigungssensor 8 über die Steuerungs- und Verarbeitungseinheit 9 an den Speicher 10 übertragen, in welchem sie zwischengespeichert werden können. Vom Speicher 10 werden sie über die Steuerungs- und Verarbeitungseinheit 9 an den RFID-Transponder 5 übertragen, um über diesen an ein RFID-Lesegerät 12 gesendet zu werden. Alternativ können die Sensordaten auch direkt, ohne Zwischenspeicherung, an das RFID-Lesegerät 12 gesendet werden. Das RFID-Lesegerät 12 ist, wie in dem in Figur 2 dargestellten Ausführungsbeispiel, in die Auswerteeinheit 4 integriert oder, wie im in Figur 1 dargestellten Ausführungsbeispiel, mit der Auswerteeinheit 4 über eine Kabelverbindung 13 gekoppelt. Die Auswerteeinheit 4 ist beispielsweise als ein tragbarer Computer, zum Beispiel als ein sogenannter Handheld-Computer oder PDA ausgebildet. Das RFID-Lesegerät 12 kann des Weiteren aber beispielsweise auch über eine drahtgebundene oder drahtlose Datenschnittstelle mit der Auswerteeinheit 4 verbunden sein, welche dann auch als eine stationäre Einheit ausgebildet sein kann.

Von der Auswerteeinheit 4 sind des Weiteren über deren RFID-Lesegerät Befehle an den RFID-Transponder 5 zu übertragen und von diesem an die Steuerungs- und Verarbeitungseinheit 9 zu übertragen, so dass von der Steuerungs- und Verarbeitungseinheit 9 der Beschleunigungssensor 8 entsprechend angesteuert werden kann, um eine Beschleunigungsmessung zu starten und entsprechend den von der Auswerteeinheit 4 vorgegebenen Parametern durchzuführen. Die Beschleunigungssensoreinheit 7 ist des Weiteren zur Energieübertragung mit dem RFID-Transponder 5 gekoppelt, d. h. sowohl der RFID-Transponder 5 selbst als auch die Bestandteile der Beschleunigungssensoreinheit 7, also der Beschleunigungssensor 8, der Speicher 10 und die Steuerungs- und Verarbeitungseinheit 9 werden von einer Versorgungsspannung Vcc des RFID-Transponders 5 versorgt, so dass die Beschleunigungssensoreinheit 7 keine eigene Energiequelle beispielsweise in Form einer Batterie benötigt.

Der RFID-Transponder 5 ist als ein passiver RFID-Transponder 5 ausgebildet, d. h. er weist keine eigene permanente Energiequelle in Form einer Batterie auf, sondern wird vom RFID-Lesegerät 12 mit elektrischer Energie versorgt. Durch dessen elektromagnetische Wellen bzw. dessen elektromagnetisches Wechselfeld wird im RFID-Transponder 5 elektrische Energie induziert. Diese elektrische Energie wird in einem hier nicht näher dargestellten Kondensator des RFID-Transponders 5 kapazitiv gespeichert. Alternativ oder zusätzlich ist es beispielsweise auch möglich, dass der RFID-Transponder 5 einen Akkumulator zur Speicherung der induzierten elektrischen Energie aufweist. Dieser Akkumulator kann aufgrund der sehr geringen jeweils zu speichernden elektrischen Energie sehr klein ausgebildet sein. Mit dieser elektrischen Energie ist auch die Beschleunigungssensoreinheit 7 zu betreiben. Auf diese Weise ist die Sensoranordnung 3 besonders klein und leicht ausgebildet, so dass sie auf sehr einfache Weise an einer geeigneten Stelle beispielsweise an einem Gehäuse des Messobjektes 1 anzuordnen ist, ohne eine Funktion des Messobjektes 1 zu beeinträchtigen oder die Schwingungen des Messobjektes 1 zu beeinflussen und dadurch zu verfälschen.

Alternativ oder zusätzlich zur Energieversorgung der Sensoranordnung 3, d. h. der Beschleunigungssensoreinheit 7 und/oder des RFID-Transponders 5 durch das RFID-Lesegerät 12, ist beispielsweise auch die Energieversorgung mittels Energy Harvesting möglich, d. h. die Umwandlung von am Messort vorhandenen Energieformen mittels dazu geeigneter Einrichtungen in elektrische Energie zum Betrieb der Sensoranordnung 3. Diese Einrichtung bzw. eine Mehrzahl derartiger Einrichtungen kann/können beispielsweise als Thermoelement, Schwingungsaufnehmer oder Lichtempfänger, d. h. beispielsweise als Solarmodul ausgebildet sein. Auch eine Kombination verschiedener derartiger Einrichtungen ist möglich.

Die Beschleunigungssensoreinheit 7 und der RFID-Transponder 5 sind, wie in den Figuren 1 bis 3 schematisch dargestellt, als eine gemeinsame Baueinheit ausgebildet und in einem gemeinsamen Gehäuse angeordnet, mittels welchem sie am Messobjekt 1 zu befestigen sind. Das Gehäuse weist dazu beispielsweise, wie in Figur 3 dargestellt, ein entsprechendes Verbindungselement 14 zum stoffschlüssigen, formschlüssigen und/oder kraftschlüssig Befestigen der Sensoranordnung 3 am Messobjekt 1 auf. Eine derartige Sensoranordnung 3 weist beispielsweise lediglich einen Durchmesser von ca. 15 mm, eine Dicke von ca. einem Millimeter und ein Gewicht von ca. 0,2 g auf. Das Gewicht und die Größe sind damit gegenüber einem Gewicht und einer Größe des Messobjektes 1 verschwindend gering, so dass das Messobjekt 1 durch die Sensoranordnung 3 nicht beeinflusst oder in ihrer Funktion beeinträchtigt wird. Durch die sehr geringen Abmessungen ist die Sensoranordnung 3 sehr einfach am Messobjekt 1 anzuordnen. Durch das kontaktlose Auslesen des RFID-Transponders 5 ist es dabei auch möglich, die Sensoranordnung 3 an relativ unzugänglichen Stellen am Messobjekt 1 anzuordnen, da es lediglich erforderlich ist, dass RFID-Lesegerät 12 in eine ausreichende Nähe zum RFID-Transponder 5 zu bringen, um mit diesem Kontakt aufzunehmen und die Datenübertragung zu ermöglichen.

Alternativ zu einem gemeinsamen Gehäuse der Sensoranordnung 3 ist es auch möglich, verschiedene Bestandteile der Sensoranordnung 3 getrennt voneinander anzuordnen und beispielsweise kabelgebunden miteinander zu verbinden. So kann beispielsweise, wenn eine Schwingungsermittlung im Inneren des Messobjektes 1 erforderlich ist, die Beschleunigungssensoreinheit 7 im Inneren und der RFID-Transponder 5 außen am Messobjekt 1 angeordnet sein, verbunden durch ein oder mehrere Kabel. Des Weiteren ist es beispielsweise auch möglich lediglich den Beschleunigungssensor 8 im Messobjekt 1 anzuordnen und alle andere Bestandteile der Sensoranordnung 3 außerhalb des Messobjektes 1 anzuordnen und kabelgebunden mit dem Beschleunigungssensor 8 zu verbinden.

Auf diese Weise ist die berührungslose Datenübertragung zwischen dem RFID-Transponder 5 und dem RFID-Lesegerät 12 und die berührungslose Energieübertragung zwischen dem RFID-Lesegerät 12 und dem RFID-Transponder 5 weiterhin ermöglicht. Bei einer Anordnung der gesamten Sensoranordnung 3 im Messobjekt 1 könnte diese berührungslose Datenübertragung beispielsweise aufgrund eines zu großen Abstandes zwischen dem RFID-Transponder 5 und dem RFID-Lesegerät 12 und/oder aufgrund einer metallischen Abschirmung beispielsweise durch das Gehäuse des Messobjektes 1 gestört oder vollständig unterbunden sein.

Die Beschleunigungssensoreinheit 7 ist derart ausgebildet, dass mit ihr Beschleunigungen in einer Dimension oder in mehreren Dimensionen eines räumlichen Koordinatensystems erfassbar sind, d. h. beispielsweise Beschleunigungen in x-Richtung und/oder in y-Richtung und/oder in z-Richtung des räumlichen Koordinatensystems und/oder Rotationsbeschleunigungen. Dabei sind die jeweiligen Dimensionen, in welcher die Beschleunigungen zu erfassen sind, auswählbar.

Ist das Messobjekt 1 oder dessen Gehäuse, an welchem die Sensoranordnung 3 befestigt ist, aus Metall, so weist die Sensoranordnung 3 zweckmäßigerweise eine hier nicht dargestellte Abschirmung gegenüber dem Messobjekt 1 aus einem magnetisch permeablen Material auf, beispielsweise aus einem Ferritmaterial. Diese Abschirmung ist beispielsweise an einer dem Messobjekt 1 zugewandten Rückseite der Sensoranordnung 3 angeordnet. Durch die Abschirmung ist eine Störung der durch das RFID-Lesegerät 12 erzeugten elektromagnetischen Wellen durch beispielsweise ein Metallgehäuse des Messobjektes 1 verhindert oder zumindest deutlich reduziert. Dadurch ist eine störungsfreie Datenübertragung von der Sensoranordnung 3 zur Auswerteeinheit 4 und umgekehrt sichergestellt und es sind längere Übertragungswege ermöglicht, d. h. es ist ein größerer Abstand zwischen dem RFID-Lesegerät 12 und dem RFID-Transponder 5 möglich.

Die Auswerteeinheit 4 der Vorrichtung 2 ist, wie bereits beschrieben, mit dem RFID-Lesegerät 12 zum Auslesen des RFID-Transponders 5 gekoppelt, wie in Figur 1 dargestellt, oder ein solches RFID-Lesegerät 12 ist in die Auswerteeinheit 4 integriert, wie in Figur 2 dargestellt. Mit der Auswerteeinheit 4 ist die Sensoranordnung 3 zu steuern und/oder zu regeln und es sind Sensordaten aus der Sensoranordnung 3 auszulesen und in der Auswerteeinheit 4 auszuwerten. Des Weiteren weist die Auswerteeinheit 4 zweckmäßigerweise zumindest eine Eingabeeinheit, zumindest eine Ausgabeeinheit und zumindest eine Verarbeitungseinheit zur Verarbeitung und Auswertung der empfangenen Sensordaten der Sensoranordnung 3 auf, so dass die ermittelten Schwingungen visualisiert werden können. Dabei werden die Schwingungen aus den als Beschleunigungsdaten ausgebildeten Sensordaten des Beschleunigungssensors 8 bzw. der Beschleunigungssensoreinheit 7 ermittelt, wobei jeweils zwei Beschleunigungen in entgegengesetzter Richtung eine Schwingung ergeben. Zudem sind auf diese Weise Vorgaben für eine jeweils durchzuführende Schwingungsermittlung an der Auswerteeinheit 4 der Vorrichtung 2 auszuwählen und an die Sensoranordnung 3 zu übermitteln. Des Weiteren weist die Auswerteeinheit 4 zweckmäßigerweise zumindest eine Datenschnittstelle zur drahtlosen oder drahtgebundenen Datenübertragung auf, um die Ergebnisse der Schwingungsermittlung an andere Einrichtungen exportieren zu können.

In einem Verfahren zur Ermittlung von Schwingungen des Messobjektes 1 unter Verwendung der Vorrichtung 2 werden die Sensordaten der an dem Messobjekt 1 stoffschlüssig, formschlüssig und/oder kraftschlüssig befestigten Sensoranordnung 3 mittels des RFID-Lesegerätes 12 berührungslos ausgelesen. Dabei wird vorzugsweise mittels des RFID-Lesegerätes 12 der Auswerteeinheit 4 berührungslos Kontakt zu dem RFID-Transponder 5 der Sensoranordnung 3 aufgenommen, wobei der RFID-Transponder 5 vom RFID-Lesegerät 12 mit elektrischer Energie versorgt wird, welche im RFID-Transponder 5 gespeichert wird. Danach wird der Kontakt des RFID-Lesegerätes 12 zum RFID-Transponder 5 unterbrochen und mittels der Sensoranordnung 3 eine Schwingungsermittlung durchgeführt, wobei die Beschleunigungssensoreinheit 8 der Sensoranordnung 3 über den RFID-Transponder 5 mit elektrischer Energie versorgt wird. Nach der Schwingungsermittlung wird der Kontakt zwischen dem RFID-Lesegerät 12 und dem RFID-Transponder 5 wieder hergestellt, um die von der Sensoranordnung 3 ermittelten Sensordaten mittels des RFID-Transponders 5 an das RFID-Lesegerät 12 der Auswerteeinheit 4 zu übertragen. Auf diese Weise wird sichergestellt, dass die Schwingungsermittlung nicht durch die Auswerteeinheit 4 und deren RFID-Lesegerät 12 beeinflusst wird, dass beispielsweise auch der Beschleunigungssensor 8 nicht durch die elektromagnetischen Wellen des RFID-Lesegerätes 12 gestört wird.

Der berührungslose Kontakt zwischen dem RFID-Lesegerät 12 und dem RFID-Transponder 5 der Sensoranordnung 3 ist in den Figuren 1 und 2 durch einen gewellten Doppelpfeil 15 schematisch dargestellt, wobei die drahtlose Kommunikationsverbindung zur Datenübertragung zwischen dem RFID-Transponder 5 und dem RFID-Lesegerät 12 eine bidirektionale Kommunikationsverbindung ist, über welche Daten vom RFID-Transponder 5 zum RFID-Lesegerät 12 und vom RFID-Lesegerät 12 zum RFID-Transponder 5 übertragen werden können. Eine Energieübertragung findet hingegen lediglich vom RFID-Lesegerät 12 auf den RFID-Transponder 5 statt.

Die Schwingungsermittlung erfolgt über eine eindimensionale oder mehrdimensionale zeitabhängige Ermittlung der auftretenden Beschleunigungen an der Messstelle, an welcher die Sensoranordnung 3 am Messobjekt 1 befestigt ist. Beispielsweise mittels einer Fourieranalyse können aus zeitabhängigen Beschleunigungsmessungen auftretende Schwingungsfrequenzen und zugehörige Amplituden bestimmt werden. In einem normalen Betriebsfall des jeweiligen Messobjektes 1 ergibt sich hierbei ein typisches Frequenzspektrum, welches abhängig vom jeweiligen Messobjekt 1 oder der jeweiligen Messstelle am Messobjekt 1 ist. Vorteilhafterweise kann dieses typische Frequenzspektrum auch im Speicher 10 der Sensoranordnung 3 und/oder in einer Speichereinheit der Auswerteeinheit 4 hinterlegt sein. Wird bei einer Schwingungsermittlung eine deutliche Abweichung von diesem typischen Frequenzspektrum festgestellt, so ist von einer wesentlichen Änderung am Messobjekt 1 auszugehen, welche auf einen Schaden hindeutet. Anhand des auf diese Weise erfassten geänderten Spektrums kann bei einer ausreichend vorhandenen Vergleichsbasis an Frequenzspektren und bei deren Erfassung vorhandenen Schäden auf einen im aktuellen Fall jeweils vorhandenen Schaden geschlossen werden oder es ist zumindest eine Eingrenzung auf eine Anzahl von Schadensvarianten möglich. Die Fourieranalyse kann in der Auswerteeinheit 4 vorgenommen werden oder bereits in der Sensoranordnung 3, d. h. in deren Steuerungs- und Verarbeitungseinheit 9. Die zweite Alternative hat den Vorteil, dass deutlich weniger Daten über die kontaktlose Schnittstelle, d. h. vom RFID-Transponder 5 zum RFID-Lesegerät 12 zu übertragen sind. Dies führt zu kürzeren Auslesezeiten.

Während des ersten Kontaktes des RFID-Lesegerätes 12 mit dem RFID-Transponder 5 kann neben der Energieübertragung mittels der Auswerteeinheit 4 durch eine Datenübertragung beispielweise ein Startzeitpunkt für die Schwingungsermittlung vorgegeben werden, beispielsweise sofort oder mit einer vorgegebenen Startverzögerung. Des Weiteren kann vorgegeben werden, ob Beschleunigungen und daraus resultierende Schwingungen in Richtung der x-Achse, der y-Achse und/oder der z-Achse des räumlichen Koordinatensystems und/oder Rotationsbeschleunigungen erfasst werden sollen. Zudem können beispielsweise weitere Vorgaben getätigt werden, zum Beispiel eine Abtastrate, eine Auflösung, ein Beschleunigungswert, bis zu dem die Beschleunigungen zu erfassen und/oder darzustellen sind, eine Bandbreite, ein Messintervall und/oder eine Anzahl von Messwerten.

Während jedes Kontaktes des RFID-Transponders 5 mit dem RFID-Lesegerät 12 oder zumindest während eines der Kontakte wird zweckmäßigerweise ein eindeutiger Identifikationscode des RFID-Transponders 5 von diesem an das RFID-Lesegerät 12 übertragen, so dass der RFID-Transponder 5 und über diesen das Messobjekt 1, an welchem er befestigt ist, eindeutig identifizierbar ist und dadurch die ermittelten Sensordaten eindeutig dem jeweiligen Messobjekt 1 zuzuordnen sind bzw. bei einer Mehrzahl von Sensoranordnungen 3 am Messobjekt 1 eindeutig einem jeweiligen Bereich am Messobjekt 1 zuzuordnen sind, an welchem die jeweilige Sensoranordnung 3 befestigt ist.

Die Sensoranordnung 3, das Messobjekt 1 mit der daran stoffschlüssig, formschlüssig und/oder kraftschlüssig befestigten Sensoranordnung 3, die Vorrichtung 2 und das Verfahren ermöglichen auf einfache und kostengünstige Weise eine hochgenaue Schwingungsermittlung, welche nicht durch äußere Einflüsse verfälscht ist, da die Sensordaten der Beschleunigungssensoreinheit 7 mittels des RFID-Lesegerätes 12 berührungslos auslesbar sind. Dadurch ist keine Berührung des Messobjektes 1 erforderlich, welche Schwingungen des Messobjektes 1 beeinflussen und verändern würde. Zudem werden in der bevorzugten Verfahrensvariante die Beschleunigungswerte mittels des Beschleunigungssensors 8 erst ermittelt, nachdem der Kontakt der Sensoranordnung 3 zum RFID-Lesegerät 12 unterbrochen wurde. Dadurch wird die Beschleunigungsermittlung und die daraus resultierende Schwingungsermittlung nicht durch das elektromagnetische Feld des RFID-Lesegerätes 12 beeinflusst.

Die Sensoranordnung 3, die Vorrichtung 2 und das Verfahren sind beispielsweise zu Wartungs- und Instandhaltungszwecken oder zu Analysen von Produktionsabläufen, Anlagen oder Technologien einzusetzen. Anwendungsbereiche sind beispielsweise Schwingungsmessungen an Messobjekten 1 in der chemischen Industrie, an Kraftwerken, in der Stahlindustrie oder in der Papierherstellung. Derartige Schwingungsermittlungen sind oft entscheidend, um mögliche Schäden, zum Beispiel defekte Lager, möglichst frühzeitig bei Routinekontrollen zu erkennen, so dass sehr schnell darauf reagiert werden kann. Dadurch können lange Stillstandszeiten und damit verbundene hohe Kosten vermeiden werden. Des Weiteren sind mittels der Sensoranordnung 3, der Vorrichtung 2 und des Verfahrens auch Lagebestimmungen durch die Ermittlung von Beschleunigungen möglich. Dies ermöglicht beispielsweise eine Neigungsbestimmung, zum Beispiel von Gefäßen, durch eine Ermittlung der Beschleunigung während eines Neigevorgangs.

Ist das Messobjekt 1 ein zu überwachendes Gut, so sind die Auswerteeinheiten 4 beispielsweise an zu untersuchenden Stellen in einem Produktionsablauf angeordnet, an welchen beispielsweise starke Beschleunigungen des jeweiligen Gutes durch eine Produktionsanlage, durch Anschläge oder durch schnelle Drehbewegungen auftreten. Die Auswerteeinheiten 4 oder zumindest deren RFID-Lesegeräte 12 sind an diesen Stellen beispielsweise stationär angeordnet oder werden kurzzeitig parallel zum Messobjekt 1 bewegt. Im Bereich des jeweiligen RFID-Lesegerätes 12 wird die Sensoranordnung 3 durch die elektromagnetischen Wellen des RFID-Lesegerätes 12, d. h. durch dessen Hochfrequenzfeld aktiviert und führt die gewünschten Beschleunigungsmessungen und die daraus resultierende Schwingungsermittlung durch. Die Sensordaten können dann beispielsweise sofort an das RFID-Lesegerät 12 übertragen werden. Reicht aufgrund der Geschwindigkeit des zu überwachenden Messobjektes 1 eine Zeit, in welcher sich die Sensoranordnung 3 in einem Funktionsbereich des RFID-Lesegerätes 12 befindet, nicht aus, um die Sensordaten zu übertragen, so können die Sensordaten auch in einem nicht flüchtigen Speicher 10 der Sensoranordnung 3 gespeichert werden und zu einem späteren Zeitpunkt mit einem RFID-Lesegerät 12 ausgelesen werden.

Es können auch eine Mehrzahl derartiger Sensoranordnungen 3 am jeweiligen Messobjekt 1 befestigt sein, um Schwingungsermittlungen an mehreren Messstellen durchzuführen. In diesem Fall kann beispielsweise auch ein RFID-Lesegerät 12 mit einer entsprechend ausgebildeten Antenne 6 auch eine Mehrzahl von Sensoranordnungen 3, welche sich im Funktionsbereich der Antenne 6 befinden, aktivieren. Dies erfolgt beispielsweise unter Verwendung eines der aus dem Stand der Technik bekannten Antikollisionsverfahren für RFID-Transponder 5.

Die Sensoranordnung 3 weist bei einer HF-Lösung beispielsweise einen Durchmesser von ca. 15 mm und eine Dicke von ca. 3 mm auf. Bei einer UHF-Lösung weist die Sensoranordnung 3 beispielsweise eine Länge von ca. 50 mm, eine Breite von ca. 15 mm und eine Dicke von ca. 3 mm auf. Ein Gewicht der Sensoranordnung ist beispielsweise kleiner als 5 Gramm.

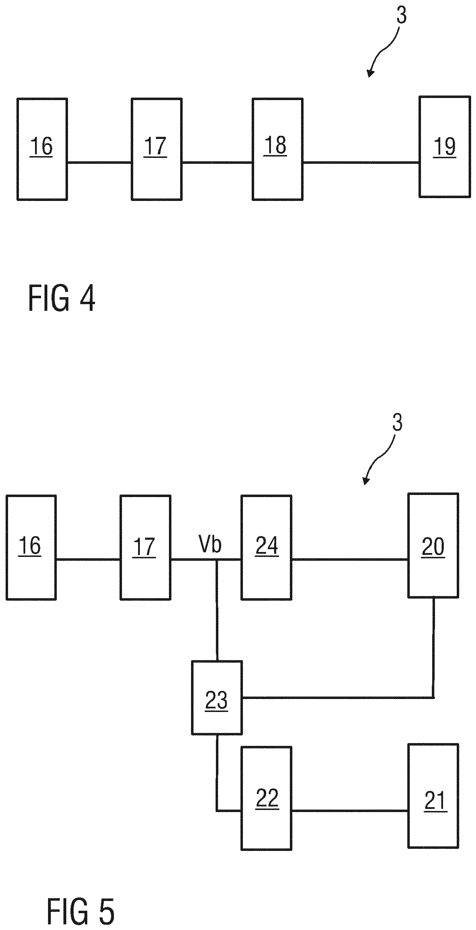

Die Figuren 4 bis 6 zeigen weitere Ausführungsformen der Sensoranordnung 3. Dabei ist in Figur 4 eine Basisschaltung der Sensoranordnung 3 für LF-, HF- oder UHF-Transponderschaltungen dargestellt, mit einer Antenneneinheit 16 aus Antenne 6 und einem Schwingkreis, mit einem Gleichrichter 17, einer Glättungs- und/oder Speicherkapazität 18 von beispielsweise ca. 1 nF bis 100 µF und einer Gesamtschaltung 19 aus einem so genannten RFID-Frontend, dem Speicher 10, einer Steuerlogik, dem Beschleunigungssensor 8, einem Analog-Digital-Wandler und weiteren Bauteilen.

Diese Basisschaltung weist folgenden Nachteil auf: Wenn man sehr große Glättungs- und/oder Speicherkapazitäten 18 zur Verbesserung des Signal-Rausch-Abstandes des Beschleunigungssensors 8 einsetzt oder den Beschleunigungssensor 8 noch eine Zeitlang ohne elektromagnetische Energieeinspeisung arbeiten lassen möchte, wird die Gesamtschaltung 19 erst nach einem späten Zeitpunkt betriebsfähig (hohe Aufladezeitkonstante: Quellwiderstand Gleichrichter mal Kapazität).

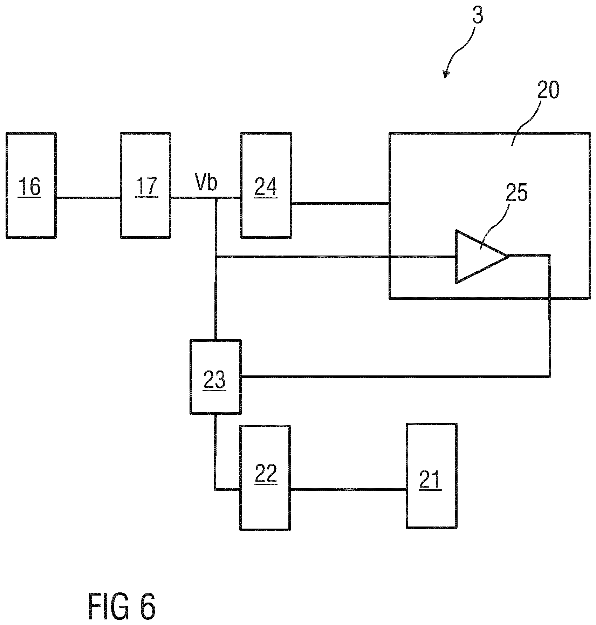

Oft ist es sehr wichtig z.B. die ID-Nummer des RFID-Transponders 5, d. h. den eindeutigen Identifikationscode, sehr schnell auszulesen. Für diesen Fall schaffen die in den Figuren 5 und 6 dargestellten Ausführungsformen die Möglichkeit. Dabei ist eine Schaltungskomponente 20, welche das RFID-Frontend, den Speicher 10 und die Steuerlogik aufweist, betriebsspannungsmäßig von der Schaltung zum Betreiben der Sensorik zu trennen. Für diese Schaltungskomponente 20 mit RFID-Frontend, Speicher 10 und Steuerlogik ist eine kleine Glättungskapazität 24 von beispielsweise ca. 1 nF vorgesehen. Die Sensorikschaltung 21 aus Beschleunigungssensor 8und/oder Aktuator, Sensorlogik und Analog-Digital-Wandler wird mit einer eigenen großen Glättungs- und/oder Speicherkapazität 22 von beispielsweise bis zu 100 µF betrieben, die wiederum über eine Trennschaltung 23 an die Basisbetriebsspannung Vb angekoppelt ist. Damit kann dafür gesorgt werden, dass die Basisbetriebsspannung Vb zunächst mit einer sehr kleinen Zeitkonstante aufgeladen wird. Die große Glättungs- und/oder Speicherkapazität 22 wird dabei von der kleinen Glättungskapazität 24 mittels der Trennschaltung 23 über einen Widerstand, dessen Dimensionierung von der Anwendung abhängt, und einer Diode getrennt.

In einem speziellen Fall kann, wie in Figur 6 dargestellt, die Diode in der Trennschaltung 23 durch einen fernsteuerbaren Schalter (MOS-Transistor) ersetzt oder ergänzt werden. Der Schalter wird dabei über einen Spannungskomparator 25, der die Basisbetriebsspannung Vb misst, und/oder über die Steuerlogik und die drahtlose RFID-Schnittstelle befehlsgesteuert. Die Hysterese des Spannungskomparators 25 sollte dann so dimensioniert sein, dass ein Öffnen des Schalters bereits bei einer Basisbetriebsspannung Vb erfolgt, die ein noch einwandfreies Arbeiten der Schaltungskomponente 20, d. h. des Schaltungsblocks aus RFID-Frontend, Speicher und Steuerlogik, gestattet. Also z.B. Einschalten bei 2,0V und Ausschalten bei 1,8V. Damit wird sichergestellt, dass nur so viel Energie auf die große Glättungs- und/oder Speicherkapazität 22 gegeben wird. wie gerade über die drahtlose Schnittstelle zur Verfügung steht.

### BEZUGSZEICHENLISTE

- 1: Messobjekt
- 2: Vorrichtung
- 3: Sensoranordnung
- 4: Auswerteeinheit
- 5: RFID-Transponder
- 6: Antenne
- 7: Beschleunigungssensoreinheit
- 8: Beschleunigungssensor
- 9: Steuerungs- und Verarbeitungseinheit
- 10: Speicher
- 11: Datenverbindung
- 12: RFID-Lesegerät
- 13: Kabelverbindung
- 14: Verbindungselement
- 15: Doppelpfeil
- 16: Antenneneinheit
- 17: Gleichrichter
- 18: Glättungs- und/oder Speicherkapazität
- 19: Gesamtschaltung
- 20: Schaltungskomponente
- 21: Sensorikschaltung
- 22: große Glättungs- und/oder Speicherkapazität
- 23: Trennschaltung
- 24: kleine Glättungskapazität
- 25: Spannungskomparator

- Vb: Basisbetriebsspannung
- Vcc: Versorgungsspannung

## Patentansprüche

1. Sensoranordnung (3) zur Ermittlung von Schwingungen eines Messobjektes (1), welche stoffschlüssig, formschlüssig und/oder kraftschlüssig am Messobjekt (1) befestigbar oder befestigt ist, umfassend einen RFID-Transponder (5) und eine mit diesem gekoppelte Beschleunigungssensoreinheit (7), wobei Sensordaten der Beschleunigungssensoreinheit (7) in einem Speicher (10) zwischenzuspeichern und über den RFID-Transponder (5) zu versenden sind, wobei die Beschleunigungssensoreinheit (7) über den RFID-Transponder (5) mit elektrischer Energie versorgbar ist, wobei der RFID-Transponder (5) als ein passiver RFID-Transponder (5) ausgebildet ist, welcher einen Kondensator zur kurzzeitigen kapazitiven Zwischenspeicherung elektrischer Energie aufweist, wobei mittels der elektrischen Energie die Beschleunigungssensoreinheit (7) zu betreiben ist, und **dadurch gekennzeichnet, dass** für eine Schaltungskomponente (20), welche ein RFID-Frontend des RFID-Transponders (5), den Speicher (10) und eine Steuerlogik aufweist, eine kleine Glättungskapazität (24) vorgesehen ist, und eine Sensorikschaltung (21) aus Beschleunigungssensor (8), Sensorlogik und Analog-Digital-Wandler mit dem als große Glättungs- und/oder Speicherkapazität (22) ausgebildeten Kondensator betrieben wird, der über eine Trennschaltung (23) an eine Basisbetriebsspannung (Vb) angekoppelt ist.

2. Sensoranordnung (3) nach Anspruch 1, **dadurch gekennzeichnet, dass** die Beschleunigungssensoreinheit (7) derart ausgebildet ist, dass mit ihr Beschleunigungen in einer Dimension oder in mehreren Dimensionen eines räumlichen Koordinatensystems erfassbar sind.

3. Sensoranordnung (3) nach einem der vorhergehenden Ansprüche, umfassend eine Abschirmung gegenüber dem Messobjekt (1) aus einem magnetisch permeablen Material.

4. Vorrichtung (2) zur Ermittlung von Schwingungen eines Messobjektes (1), umfassend zumindest eine Sensoranordnung (3) nach einem der Ansprüche 1 bis 3 und zumindest eine Auswerteeinheit (4) zum Steuern und/oder Regeln der Sensoranordnung (3) und/oder zum Auslesen von Sensordaten der Sensoranordnung (3), wobei die Auswerteeinheit (4) mit einem RFID-Lesegerät (12) gekoppelt ist oder wobei das RFID-Lesegerät (12) in die Auswerteeinheit (4) integriert ist.

5. Vorrichtung (2) nach Anspruch 4,
**dadurch gekennzeichnet, dass** die Auswerteeinheit (4) zumindest eine Eingabeeinheit, zumindest eine Ausgabeeinheit und/oder zumindest eine Verarbeitungseinheit zur Verarbeitung und Auswertung von empfangenen Sensordaten der Sensoranordnung (3) umfasst.

6. Messobjekt (1) mit zumindest einer Sensoranordnung (3) nach einem der Ansprüche 1 bis 3, wobei die Sensoranordnung (3) am Messobjekt (1) stoffschlüssig, formschlüssig und/oder kraftschlüssig befestigt ist.

7. Verfahren zur Ermittlung von Schwingungen eines Messobjektes (1) unter Verwendung einer Vorrichtung (2) nach Anspruch 4 oder 5, wobei Sensordaten einer an einem Messobjekt (1) stoffschlüssig, formschlüssig und/oder kraftschlüssig befestigten Sensoranordnung (3) mittels eines RFID-Lesegerätes (12) berührungslos ausgelesen werden,
- wobei mittels des RFID-Lesegerätes (12) einer Auswerteeinheit (4) berührungslos Kontakt zu einem RFID-Transponder (5) der Sensoranordnung (3) aufgenommen wird, wobei der RFID-Transponder (5) vom RFID-Lesegerät (12) mit elektrischer Energie versorgt wird, welche im RFID-Transponder (5) gespeichert wird,
- wobei danach der Kontakt des RFID-Lesegerätes (12) zum RFID-Transponder (5) unterbrochen wird und mittels der Sensoranordnung (3) eine Schwingungsermittlung durchgeführt wird, wobei eine Beschleunigungssensoreinheit (7) der Sensoranordnung (3) über den RFID-Transponder (5) mit elektrischer Energie versorgt wird,
- und wobei nach der Schwingungsermittlung der Kontakt zwischen dem RFID-Lesegerät (12) und dem RFID-Transponder (5) wieder hergestellt wird, um die von der Sensoranordnung (3) ermittelten Sensordaten mittels des RFID-Transponders (5) an das RFID-Lesegerät (12) der Auswerteeinheit (4) zu übertragen.

## Claims

1. Sensor assembly (3) for determining vibrations of a measurement object (1), which sensor assembly is attachable or attached to the measurement object (1) by a material bond, in a form-fitting and/or force-fitting manner, comprising an RFID transponder (5) and an acceleration sensor unit (7) coupled to the latter, wherein sensor data from the acceleration sensor unit (7) are to be buffered in a memory (10) and transmitted via the RFID transponder (5), wherein the acceleration sensor unit (7) is suppliable with electrical energy via the RFID transponder (5), wherein the RFID transponder (5) is designed as a passive RFID transponder (5) which has a capacitor for briefly capacitively buffering electrical energy, wherein the acceleration sensor unit (7) is to be operated by means of the electrical energy, and **characterized in that** a small smoothing capacitance (24) is provided for a circuit component (20) which has an RFID frontend of the RFID transponder (5), the memory (10) and a control logic, and a sensor circuit (21) comprising an acceleration sensor (8), sensor logic and an analogue-to-digital converter is operated with the capacitor which is designed as a large smoothing and/or storage capacitance (22) and is coupled to a basis operating voltage (Vb) via an isolation circuit (23).

2. Sensor assembly (3) according to Claim 1, **characterized in that** the acceleration sensor unit (7) is designed in such a way that accelerations in one dimension or in a plurality of dimensions of a spatial coordinate system are capturable with it.

3. Sensor assembly (3) according to one of the preceding claims, comprising a shield in relation to the measurement object (1) made from a magnetically permeable material.

4. Device (2) for determining vibrations of a measurement object (1), comprising at least one sensor assembly (3) according to one of Claims 1 to 3 and at least one evaluation unit (4) for open loop and/or closed loop control of the sensor assembly (3) and/or for reading out sensor data from the sensor assembly (3), wherein the evaluation unit (4) is coupled to an RFID reading device (12), or wherein the RFID reading device (12) is integrated into the evaluation unit (4).

5. Device (2) according to Claim 4,
**characterized in that** the evaluation unit (4) comprises at least one input unit, at least one output unit and/or at least one processing unit for processing and evaluating received sensor data from the sensor assembly (3).

6. Measurement object (1) having at least one sensor assembly (3) according to one of Claims 1 to 3, wherein the sensor assembly (3) is attached to the measurement object (1) by a material bond, in form-fitting and/or force-fitting manner.

7. Method for determining vibrations of a measurement object (1) using a device (2) according to Claim 4 or 5, wherein sensor data from a sensor assembly (3) attached to a measurement object (1) by a material bond, in a form-fitting and/or force-fitting manner are read out contactlessly by means of an RFID reading device (12),
- wherein a connection is established in a contactless way with an RFID transponder (5) of the sensor assembly (3) by means of the RFID reading device (12) of an evaluation unit (4), wherein the RFID transponder (5) is supplied by the RFID reading device (12) with electrical energy which is stored in the RFID transponder (5),
- wherein the connection between the RFID reading device (12) and the RFID transponder (5) is then interrupted and a vibration determination is carried out by means of the sensor assembly (3), wherein an acceleration sensor unit (7) of the sensor assembly (3) is supplied with electrical energy via the RFID transponder (5),
- and wherein, following the vibration determination, the connection between the RFID reading device (12) and the RFID transponder (5) is re-established in order to transmit the sensor data determined by the sensor assembly (3) by means of the RFID transponder (5) to the RFID reading device (12) of the evaluation unit (4) .

## Revendications

1. Ensemble de capteurs (3) permettant de déterminer des oscillations d'un objet de mesure (1), qui peut être ou est fixé à l'objet de mesure (1) par liaison de matière, par complémentarité de forme et/ou par adhérence, comprenant un transpondeur RFID (5) et une unité de capteur d'accélération (7) couplée à celui-ci, dans lequel des données de capteur de l'unité de capteur d'accélération (7) sont à enregistrer temporairement dans une mémoire (10) et à envoyer par l'intermédiaire du transpondeur RFID (5), l'unité de capteur d'accélération (7) pouvant être alimentée en énergie électrique par l'intermédiaire du transpondeur RFID (5), le transpondeur RFID (5) étant réalisé sous la forme d'un transpondeur RFID (5) passif qui présente un condensateur pour une accumulation temporaire capacitive d'énergie électrique, l'énergie électrique permettant d'actionner l'unité de capteur d'accélération (7), et
**caractérisé en ce que** pour un composant de circuit (20), qui présente une extrémité frontale RFID du transpondeur RFID (5), la mémoire (10) et une logique de commande, une petite capacité de lissage (24) est prévue, et un circuit de détection (21), composé d'un capteur d'accélération (8), d'une logique de capteur et d'un convertisseur analogique/numérique, est actionné par le condensateur réalisé sous forme de grande capacité de lissage et/ou d'accumulation (22) et accouplé à une tension de service de base (Vb) par l'intermédiaire d'un circuit d'isolation (23).

2. Ensemble de capteurs (3) selon la revendication 1, **caractérisé en ce que** l'unité de capteur d'accélération (7) est réalisée de telle sorte qu'elle permet de détecter des accélérations dans une dimension ou dans plusieurs dimensions d'un système de coordonnées spatiales.

3. Ensemble de capteurs (3) selon l'une quelconque des revendications précédentes, comprenant un blindage par rapport à l'objet de mesure (1) en matériau magnétiquement perméable.

4. Dispositif (2) permettant de déterminer des oscillations d'un objet de mesure (1), comprenant au moins un ensemble de capteurs (3) selon l'une quelconque des revendications 1 à 3 et au moins une unité d'évaluation (4) pour commander et/ou réguler l'ensemble de capteurs (3) et/ou pour lire des données de capteur de l'ensemble de capteurs (3), l'unité d'évaluation (4) étant couplée à un lecteur RFID (12), ou le lecteur RFID (12) étant intégré dans l'unité d'évaluation (4).

5. Dispositif (2) selon la revendication 4, **caractérisé en ce que** l'unité d'évaluation (4) comprend au moins une unité d'entrée, au moins une unité de sortie et/ou au moins une unité de traitement pour traiter et évaluer des données de capteur reçues de l'ensemble de capteurs (3).

6. Objet de mesure (1) comprenant au moins un ensemble de capteurs (3) selon l'une quelconque des revendications 1 à 3, dans lequel l'ensemble de capteurs (3) est fixé à l'objet de mesure (1) par liaison de matière, par complémentarité de forme et/ou par adhérence.

7. Procédé permettant de déterminer des oscillations d'un objet de mesure (1) en utilisant un dispositif (2) selon la revendication 4 ou 5, dans lequel des données de capteur d'un ensemble de capteurs (3) fixé à un objet de mesure (1) par liaison de matière, par complémentarité de forme et/ou par adhérence sont lues sans contact au moyen d'un lecteur RFID (12),
- dans lequel le lecteur RFID (12) d'une unité d'évaluation (4) établit une communication sans contact avec un transpondeur RFID (5) de l'ensemble de capteurs (3), le transpondeur RFID (5) étant alimenté par le lecteur RFID (12) en énergie électrique qui est accumulée dans le transpondeur RFID (5),
- dans lequel ensuite la communication du lecteur RFID (12) avec le transpondeur RFID (5) est interrompue, et l'ensemble de capteurs (3) procède à une détermination d'oscillations, une unité de capteur d'accélération (7) de l'ensemble de capteurs (3) étant alimentée en énergie électrique par l'intermédiaire du transpondeur RFID (5),
- et dans lequel, après la détermination d'oscillations, la communication entre le lecteur RFID (12) et le transpondeur RFID (5) est rétablie pour transmettre les données de capteur déterminées par l'ensemble de capteurs (3) au moyen du transpondeur RFID (5) au lecteur RFID (12) de l'unité d'évaluation (4) .
